# EUROPEAN PATENT SPECIFICATION

(11) **EP 3 902 739 B1**
(45) Date of publication and mention of the grant of the patent: **14.02.2024**
(21) Application number: 19835519.0
(22) Date of filing: 18.12.2019
(51) Int. Cl.: B62K 25/08, B62K 25/16

(54) **MOTORCYCLE SWING ARM FRONT SUSPENSION**
VORDERRADAUFHÄNGUNG FÜR MOTORRADSCHWUNGARM
SUSPENSION AVANT DE BRAS OSCILLANT DE MOTOCYCLETTE

(30) Priority: 27.12.2018 IT 201800021073
(43) Date of publication of application: 03.11.2021
(73) Proprietor: PIAGGIO & C. S.p.A., 56025 Pontedera (Pisa) (IT)
(72) Inventor: RAFFAELLI, Andrea, 56025 Pontedera (Pisa) (IT)
(74) Representative: Carangelo, Pierluigi
(86) International application number: PCT/IB2019/061008
(87) International publication number: WO 2020/136510

(56) References cited:
- WO-A1-00/13961
- DE-B- 1 065 739
- FR-A- 1 125 752
- GB-A- 841 523

## Description

### TECHNICAL FIELD OF THE INVENTION

The present invention refers to the technical field of suspensions for transport vehicles and concerns in particular a motorcycle front swing arm suspension.

### BACKGROUND OF THE INVENTION

In the motorcycle field, it is known that a swing arm suspension is used in the forecarriage of the motorcycle. A swing arm suspension, which may be either a single-sided fork or a double-sided fork, generally comprises a rigid arm, also called a steering arm, on which a swing arm is articulated which ends on the pin of the front wheel. A single-sided swing arm suspension is described for example in European Patent EP2996929B1.

In motorcycle swing arm suspensions of the prior art, the steering arm is mechanically connected to the steering handlebar of the motorcycle. Moreover, the shock absorber group, typically comprising a spring and a damper, is attached to the swing arm.

The motorcycle front swing arm suspensions of the prior art described above have several drawbacks.

A first drawback is a possible excessive sinking during braking. In effect, during braking, as an effect of the load transfer on the front of the vehicle due to deceleration, the shock absorber group tends to compress and therefore to 'sink' more than would be the case from the static weight of the vehicle with the driver and any other suspended masses (such as the passenger, baggage and the like).

The sinking of the forecarriage, possibly linked to reaching the end of stroke in compression, has as a direct result the significant modification of the attitude of the vehicle.

In effect, if one thinks, for example, of a two-wheeled motorcycle, however the same phenomenon also applies to different types of vehicles with more wheels, in the compression phase of the shock absorber group the trail of the vehicle is in particular reduced. Modifying the trail changes the sensitivity and responsiveness of the handlebar perceived by the driver. Moreover, following a poorly controlled and/or excessive sinking, an extension of the rear suspension is generally obtained, which is in turn poorly controlled with consequent lightening of the rear axle until reaching at the limit the condition of detachment of the rear wheel from the ground which may cause the loss of control of the trajectory taken by the driver.

It should be noted that the change of attitude during the sinking phase does not necessarily have negative effects a priori. In other words, on the one hand, an excessive sinking is certainly negative, since it involves a change in dynamic attitude that may put the vehicle and the driver in crisis; on the other hand, a controlled sinking of the front suspension may even facilitate and improve the drivability and driving feeling.

In effect, the driver, due also to the extent of the sinking of the front suspension, is able to perceive the dynamic behavior of the vehicle as well as notice, in advance, that the tire's grip limit has been reached. In addition, a controlled sinking of the front axle allows a better descent into a bend to take a curve both because it facilitates the lowering of the front axle and because reducing the trail increases the responsiveness and therefore the sensitivity of the driver.

As one may deduce from the above, the sinking of the front suspension, called 'dive', determines, depending on its magnitude, a substantial modification of the dynamic attitude of the vehicle. A controlled type of sinking is not only not harmful but improves the drivability and maneuverability of the vehicle. In this regard, it should be noted that in the swing arm front suspension of said prior art it is not easy to have a controlled sinking of the suspension because there is an interference of the braking force on the stiffness of the suspension.

A second drawback of the swing arm front suspensions of the prior art is that the arrangement of the parts close to the wheel hub is not very compact. This lack of compactness leads to both lower cooling efficiency of the brake disc and a lack of aesthetic cleanliness.

A third drawback of the swing arm front suspensions of the prior art is that they do not provide adequate protection for the suspension, or at least some parts thereof, from dirt.

The general object of the present description is to provide a swing arm motorcycle swing arm front suspension that is capable of resolving, in full or in part, the aforesaid drawbacks.

This object is achieved by a motorcycle front suspension as generally defined in claim 1. Preferred and advantageous embodiments of the aforesaid motorcycle suspension are defined in the accompanying dependent claims. A front suspension according to the preamble of claim 1 is known from WO0013961A1. Document FR1125752A further discloses a front motorcycle suspension comprising: a steering arm mechanically connected, or adapted to be mechanically connected, to a steering handlebar of a motorcycle; a swinging arm having a first connecting portion which rotatably connects the swinging arm to the steering arm and a second connecting portion adapted to connect the swinging arm to an associable front wheel; a shock absorber group having an attachment foot rotatably joined to the swinging arm; wherein the first connecting portion rotatably connects the swinging arm to the steering arm so that the swinging arm rotates with respect to the steering arm about a fulcrum.

The invention will be better understood from the following detailed description of the particular embodiments thereof made by way of example and, therefore, in no way limiting, with reference to the accompanying drawings briefly described in the subsequent paragraph.

### BRIEF DESCRIPTION OF THE DRAWINGS

Figure 1 shows a side plan view of a motorcycle comprising a first exemplifying and non-limiting not claimed aspect, of a motorcycle swing arm front suspension wherein said suspension is shown with some parts in cross-section.
Figure 2 shows a side view of the motorcycle front suspension of Figure 1.
Figure 3 shows a partial and enlarged side view and with some parts of the suspension of Figure 1 in cross-section.
Figure 4 shows a view in cross-section of the suspension of Figure 1.
Figure 5 shows a perspective view of the front suspension of Figure 1.
Figure 6 shows a side view of a second exemplifying and non-limiting not claimed aspect of a motorcycle front swing arm suspension.
Figure 7 shows a top view of the motorcycle front suspension of Figure 6.
Figure 8 shows a view in cross-section of the motorcycle front suspension of Figure 6.
Figure 9 shows a partial and enlarged side view and with some parts of the suspension of Figure 6 in cross-section.
Figure 10 shows a schematic side view of an embodiment according to the invention of a motorcycle swing arm front suspension.
Figure 11 shows a side schematic view of a fourth exemplifying and non-limiting not claimed aspect of a motorcycle swing arm front suspension.
Figures 12A and 12B show a schematic view of two respective operating conditions of the motorcycle front suspension according to the present invention.

### DETAILED DESCRIPTION

In the accompanying figures, identical or similar elements have been indicated at the same numerical references.

The accompanying figures show not claimed aspects and embodiments of a transport vehicle and, in particular, of a motorcycle 1. In the particular example represented in the figures, the motorcycle 1 is conceived, without thereby introducing any limitation, as a moped, comprising a front wheel 2 and a rear wheel 3, a drive motor 4, a support frame 5, a saddle 6, a steering handlebar 7 rotatably fixed to the support frame 5 so as to be able to rotate about a steering axis Z-Z.

For the purposes of the present description, the term 'motorcycle' is to be considered in the broad sense, comprising any motorcycle having at least two wheels, i.e., a front wheel 2 and a rear wheel 3. Such definition includes, therefore, also motorcycles having three wheels, including for example two paired steering wheels on the front axle and one drive wheel on the rear axle, but also motorcycles comprising a single steering wheel on the front axle and two drive wheels on the rear axle. Finally, also included in the definition of a motorcycle are so-called quadricycles, which have two wheels on the front axle and two wheels on the rear axle.

As is well known, the motorcycle 1 further comprises a head tube 8 fixed to the steering handlebars 7 so as to rotate integrally with the latter about a steering axis Z-Z.

The motorcycle 1 further comprises a motorcycle front suspension 10 adapted and configured to secure the front wheel 2 to the steering tube 8, so that this front suspension 10 is operatively interposed between the steering tube 8 and the front wheel 2.

The drive motor 4 is directly or indirectly operatively connected to a drive wheel of the motorcycle 1, in the example, to the rear wheel 3. According to a possible embodiment, the drive motor 4 is an internal combustion engine. According to an alternative embodiment, the drive motor 4 is an electric or hybrid motor.

Although in the particular examples represented and described the motorcycle front suspension 10 is a single-arm front suspension, cantilevered on one side of the front wheel 2, it should be noted that the teachings of the present patent application are also applicable to double-arm suspensions, i.e. fork suspensions.

The motorcycle front suspension 10 comprises a steering arm 11, mechanically connected or suitable to be mechanically connected to the steering handlebar 7 of the motorcycle 1. In the particular non-limiting example shown in the figures, the steering arm 11 has a portion of the upper end connected to the steering tube 8, so that it may rotate in an integral manner with the latter about the steering axis Z-Z. It should be noted that the steering arm 11 and the steering tube 8 may be two separate, mechanically coupled pieces but may also form one piece.

The motorcycle front suspension 10 further comprises a swing arm 12 having a first connection portion 13 which rotatably connects the swing arm 12 to the steering arm 11 and a second connection portion 14 adapted to connect the swing arm 12 to the associable front wheel 2.

The motorcycle front suspension 1 further comprises a shock absorber group 20 having an attachment foot 22, rotatably joined to the oscillating arm 12. The first connection portion 13 of the swing arm 12 rotatably connects the swing arm 12 to the steering arm 11 so that the swing arm 12 rotates with respect to the steering arm 11 about a fulcrum 15 which is movable with respect to the steering arm 11. Preferably, the first connection portion 13 is a first end portion of the swing arm 12 rotatably joined to the steering arm 11 to rotate about the movable fulcrum 15, and the second connection portion 14 carries a rotation pin 16 of said associable front wheel 2.

In accordance with a particularly advantageous embodiment, the motorcycle front suspension 10 comprises a disc brake caliper 28 fixed to the swing arm 12. For example, the disc brake caliper 28 is part of a braking device 28,29 of the motorcycle 1 comprising, in addition to the caliper 28, a disc 29 for a disc brake fixed to the front wheel 2 so that it may rotate together with the latter. The attachment of the caliper 28 to the swing arm 12 advantageously makes it possible to reduce the sinking of the motorcycle front suspension 10 during braking and to make the suspension 10 particularly tidy and compact in the vicinity of the hub of the front wheel 2. For example, the caliper is fixed to the swing arm 12 by means of a support bracket 125. Preferably, the second connection portion 14 of the swing arm 12 is arranged between the first connection portion 13 and the support bracket 125 of the caliper 28. For example, the support bracket 125 is a plate-shaped bracket.

Preferably, the second connection portion 14 carries a rotation pin 16 of the associable front wheel 2. This rotation pin 16 defines an axis of rotation X-X for the front wheel 2. Preferably, the rotation pin 16 of the front wheel 2 has an end portion engaged and tightened by interference in a locking seat defined inside the swing arm 12 and has a further portion that protrudes outside of said locking seat so that it may rotatably support the front wheel 2. More preferably, the aforesaid end portion of the rotation pin 16 is tightened within the aforesaid locking seat so as to prevent a relative rotation between the rotation pin 16 and the swing arm 12,32.

In accordance with an advantageous embodiment, the swing arm 12 comprises a third connection portion interposed between the first connection portion 13 and the second connection portion 14. Due to the third connection portion, the swing arm 12 is rotatably connected to the attachment foot 22 of the shock absorber group 20. For example, the motorcycle front suspension 10 comprises a hinge pin 18 that penetrates or is engaged in the third connection portion of the swing arm 12 to join rotatably the attachment foot 22 of the shock absorber group 20 to the swing arm 12.

According to the invention, the attachment foot 22 is rotatably joined to the swing arm 12 so that the swing arm 12 may rotate with respect to the attachment foot 22 about an axis of rotation that may only move along an axis of travel in relation to the steering arm 11. This is made possible by the fact that the fulcrum 15 is movable with respect to the steering arm 11.

In accordance with an advantageous embodiment, the steering arm 11 is internally hollow, e.g. tubular, and houses at least part of the shock absorber assembly 20 therein. This expedient has the advantage of reducing the exposure of the shock absorber group 20 to dirt and weather.

Preferably, the shock absorber group 20 comprises an attachment head 21 fixed to the steering arm 11, for example also arranged inside the steering arm 11. Said attachment head 21 may preferably be hinged by means of the hinge 34 to the steering arm 11.

According to a preferred embodiment, in the motorcycle front suspension 10, the shock absorber group 20 comprises a spring 23 and a damper 24,25, and the spring 23 is entirely housed in the steering arm 11. The spring 23 is, for example, a helical spring interposed between the attachment head 21 and the attachment foot 22 of the shock absorber group 20 in order to exert an elastic thrust force that tends to move the attachment head 21 and the attachment foot 22 apart. The spring 23 preferably surrounds the damper 24.

Preferably the damper comprises a stem 24 and a sheath 25, and the stem 24 is adapted and configured to slide inside the sheath 25 and is housed in the steering arm 11. Also, this expedient has the advantage of reducing the exposure of the shock absorber group 20, and in particular the stem 24, to dirt and weather. Preferably the attachment foot 22 of the shock absorber group 20 is arranged at the base of the sheath 25.

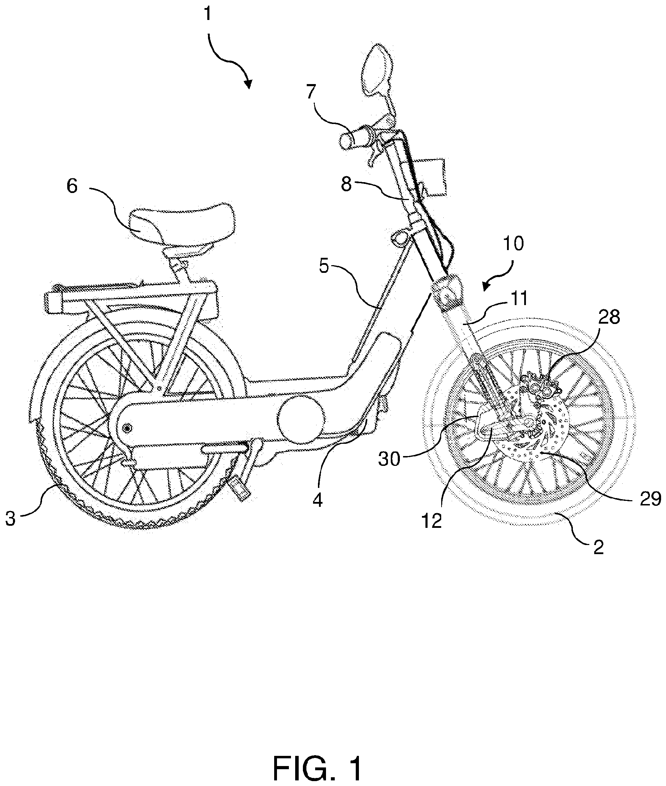

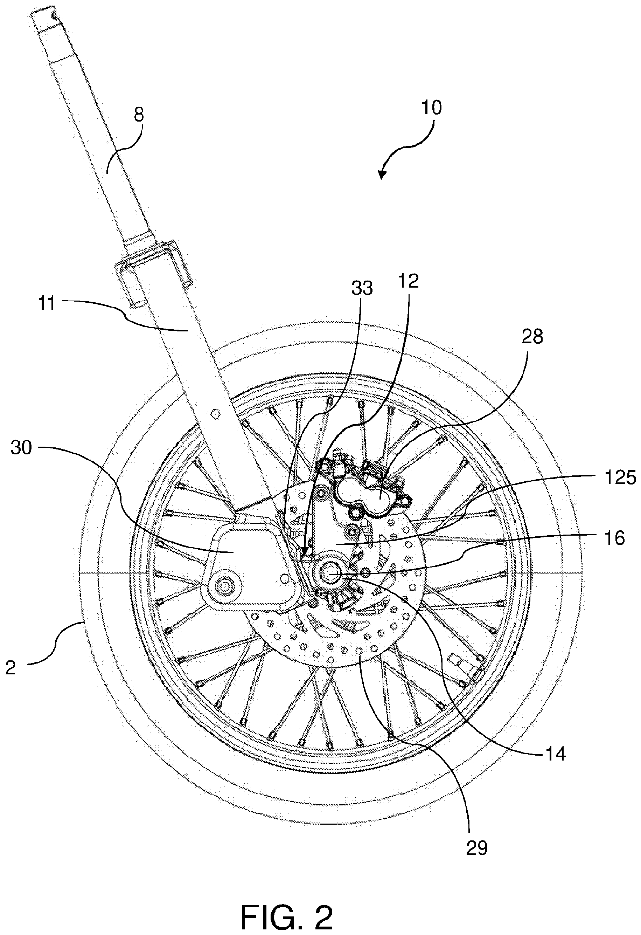

Figures 1 to 5 describe a first not claimed aspect of a motorcycle front suspension 10.

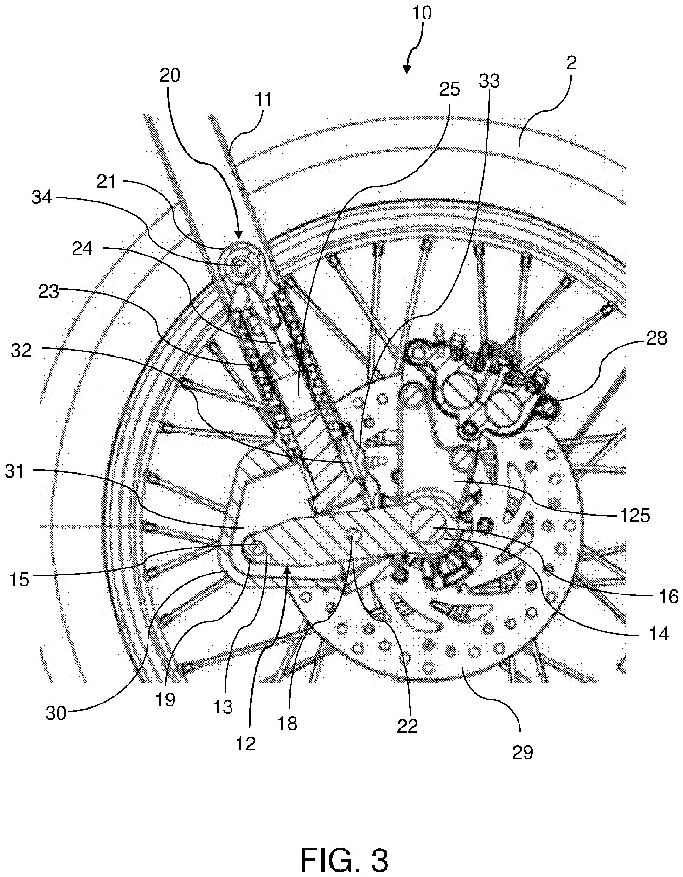

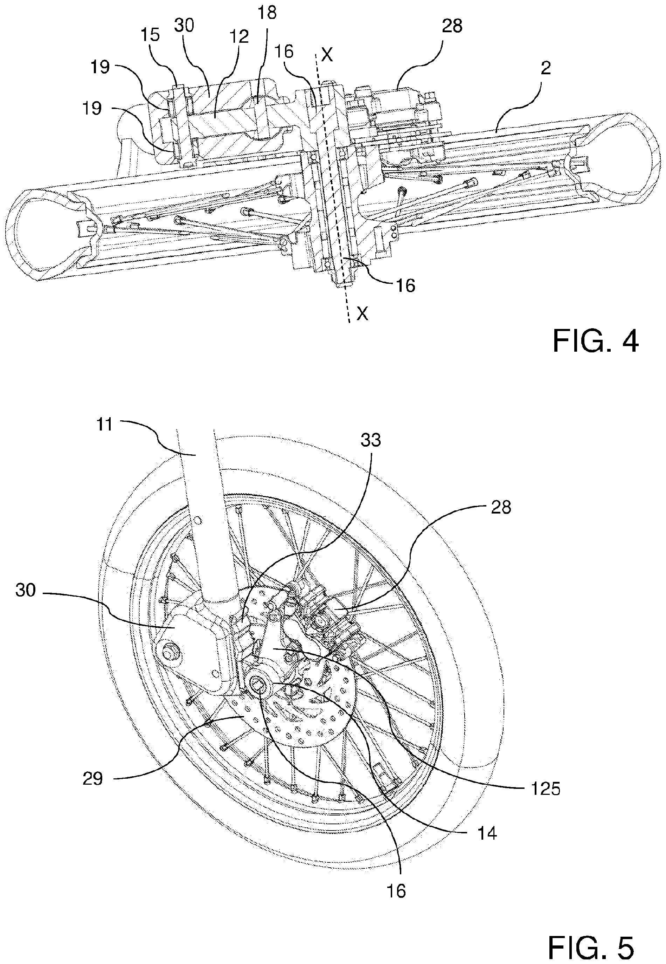

Apart from the general characteristics described, in the first not claimed aspect the movable fulcrum 15 is a yielding fulcrum. For example, the first connection portion 13 of the swing arm 12 is rotatably hinged to the swing arm 12 by means of a cylindrical hinge which is elastically fixed between the steering arm 11 and the first connection portion 13. As may be seen in Figures 3 and 4, the rotation fulcrum 15 has a hinge pin which penetrates a hole defined in the first connection portion 13 and which is fixed to the support arm 11 by elastic support means 19. These elastic support means comprise at least one silent block 19, in the example a pair of silent blocks 19 arranged on opposite sides to the swing arm 12 and arranged in two respective housings defined in the steering arm 11. The general principle of the embodiment of the suspension 10 shown in figures 1 to 5 is thus to ensure the mobility of the fulcrum 15 by elastic support means 19 of the fulcrum 15 operatively interposed between the first connection portion 13 of the swing arm 12 and the steering arm 11, which is why the fulcrum 15 may be defined as a yielding fulcrum. In accordance with a particularly advantageous embodiment, the aforesaid elastic support means have a directionally selective elasticity, i.e. the elastic deformation is greater along a defined direction (e.g. a radial direction with respect to the rotation pin 16) with respect to at least one different direction (e.g. a direction parallel to the steering axis).

According to the invention, the fulcrum 15 could be a slidable fulcrum and this characteristic could be obtained by providing, for example, for the first connection portion 13 of the swing arm 12, for having a slotted hole, i.e. extended along a direction of extension, inside of which the hinge pin that defines the rotation fulcrum is engaged. In this way, it would be possible to provide for the aforesaid hinge pin to be fixed to the steering arm 11 in such a way as to be fixed. The slotted hole may be through or blind. The aforesaid direction of extension is preferably parallel to the ground. The general principle of this alternative embodiment is to provide a linear guide that allows a translation of the fulcrum 15. It is clearly possible to provide for a combined solution that provides for both the elastic support means 19 of the fulcrum 15 and for the possibility of the fulcrum 15 to slide along a linear guide.

In accordance with an advantageous not claimed aspect, consistent with the example of Figures 1-5, the steering arm 11 comprises a housing 30 having a chamber 31 within which the first connection portion 13 is arranged. The housing 30 has a through opening 32 penetrated by the swing arm 12 so that the second connection portion 14 is arranged outside of the housing 30. Advantageously, the motorcycle front suspension further comprises an elastically deformable cap 33 fixed to said housing 30 to close the through opening 32. This significantly reduces the exposure of the shock absorber group 20 and a portion of the swing arm 12 to dirt. In accordance with a particularly advantageous embodiment, the elastically deformable cap 33 has a through-hole penetrated by the swing arm 12. In the particular example shown in Figures 1-5, there are two elastic supports for the movable fulcrum 15, in particular two silent blocks, housed in two seats defined in two opposing walls of the housing chamber 30.

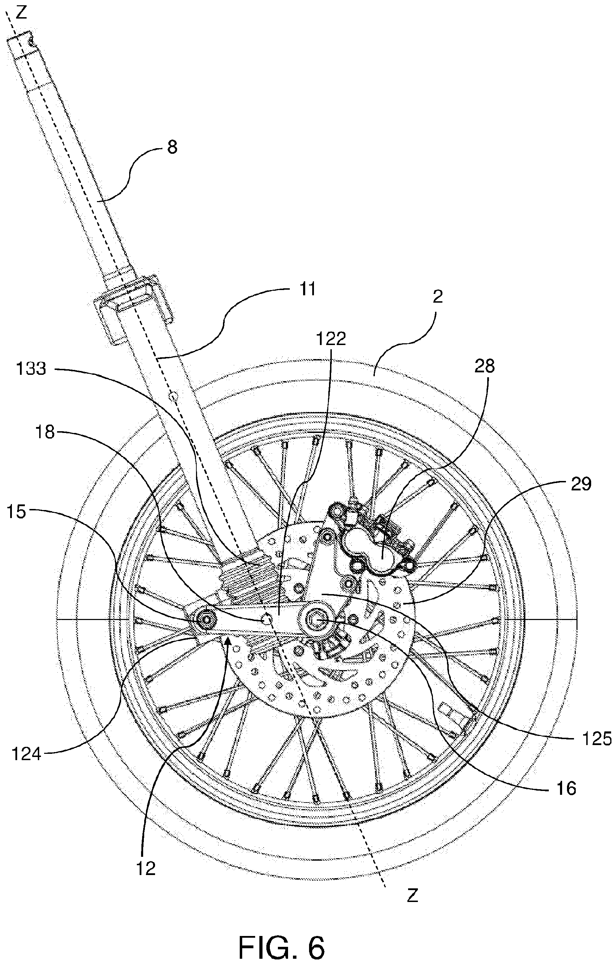

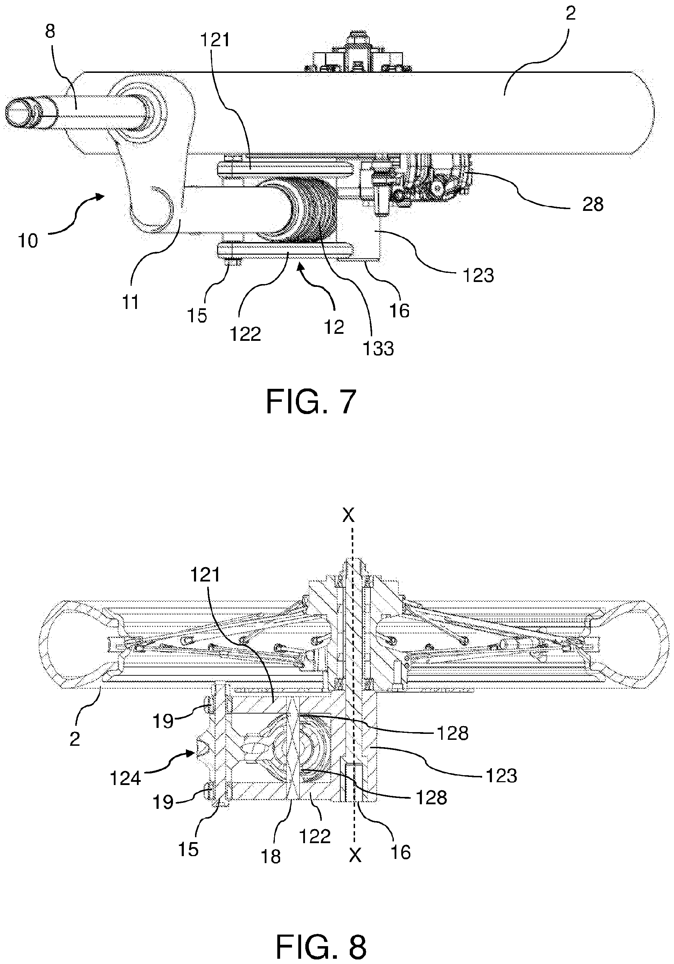

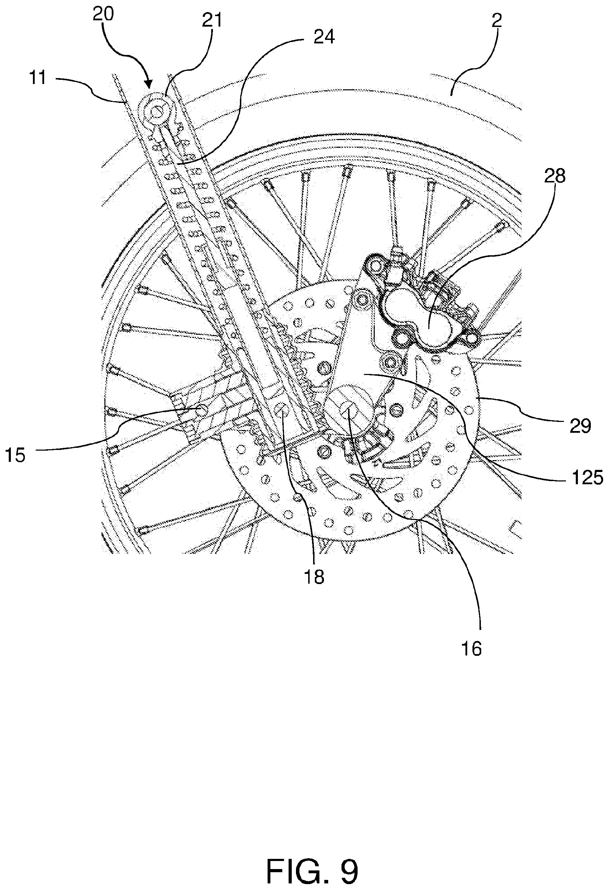

Figures 6 to 9 show an alternative not claimed aspect very similar to the one described above and which differs from the latter in that the swing arm 12 comprises a first branch 121 and a second branch 122 arranged parallel to each other, and a bridge portion 123 that connects said branches 121,122. The two branches 121, 122 are configured and arranged in such a way that the attachment foot 22 of the shock absorber group 20 is placed between them. In other words, in this alternative embodiment, the swing arm 12 is a fork arm. In contrast to the embodiment of Figures 1 to 5, no housing chamber 30 is provided.

In the not claimed aspect of the Figures 6-9 the fulcrum 15 is movable because, similarly to that which has already been described in the embodiment of the Figures 1-5, the motorcycle front suspension 10 comprises elastic support means 19 of the fulcrum 15. In the example the aforementioned means comprise two silent blocks 19, each of which is fixed to a respective branch 121, 122 of the swing arm 12, in particular inserted in a respective housing seat.

The motorcycle front suspension 10 preferably comprises a rotatable coupling block 124, which rotates about the fulcrum 15 and is operatively interposed between the branches 121,122 and the steering arm 11. This rotatable coupling block 124 is preferably T-shaped.

In accordance with an advantageous embodiment, the motorcycle front suspension of Figures 6-9 comprises a bellows cap 133, preferably elastic, fixed to a portion of the lower end of the steering arm 11.

Also, in this embodiment, the attachment foot 22 of the shock absorber group 20 is rotatably hinged to the third connection portion of the swing arm 12, in the example by means of a hinge pin 18. Preferably, this hinge pin 18 penetrates two slotted holes 128 defined in the steering arm 11 so that the hinge pin 18 and thus the attachment foot may travel along a sliding axis with respect to the steering arm 11.

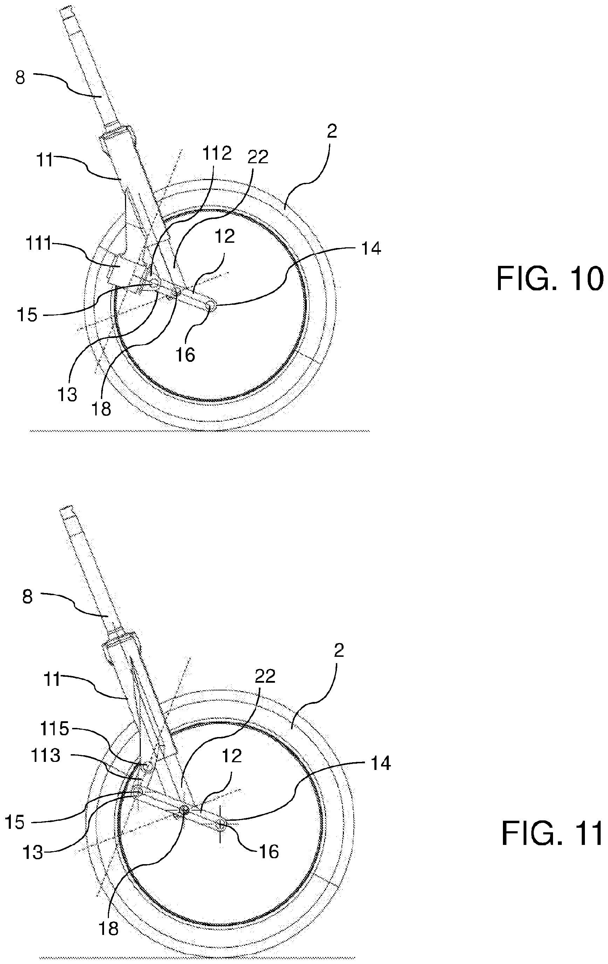

Figure 10 shows schematically an embodiment according to the invention wherein the movable fulcrum 15 is slidable with respect to the steering arm 11. In particular, the suspension 10 comprises a slider 115 rotatably hinged on the fulcrum 15 to the first connection portion 13 of the swing arm 12. The steering arm 11 comprises a linear guide that slidably supports the slider 115 so that it may move along a guide axis. Preferably, also in this embodiment the second connection portion 14 of the swing arm 12 carries the rotation pin 18 of the front wheel 2, and the attachment foot 22 of the shock absorber group 11 is rotatably hinged to a third connection portion of the swing arm 12 interposed between the first connection portion 13 and the second connection portion 14.

Figure 11 shows schematically a further not claimed aspect wherein the movable fulcrum 15 is rotatable with respect to the steering arm 11. In particular, the front suspension 11 comprises an additional rotatable arm 113, which is rotatably hinged to the swing arm 12 so that the swing arm 12 may rotate with respect to the additional rotatable arm 113 and about the movable fulcrum 15 and which is rotatably hinged to the steering arm 11 so that the additional rotatable arm 113 may rotate with respect to the steering arm 11 with respect to an additional, preferably fixed, fulcrum 115. Preferably, also in this embodiment the second connection portion 14 of the swing arm 12 carries the rotation pin 16 of the front wheel 2, and the attachment foot 22 of the shock absorber group 11 is rotatably hinged to a third connection portion of the swing arm 12 interposed between the first connection portion 13 and the second connection portion 14.

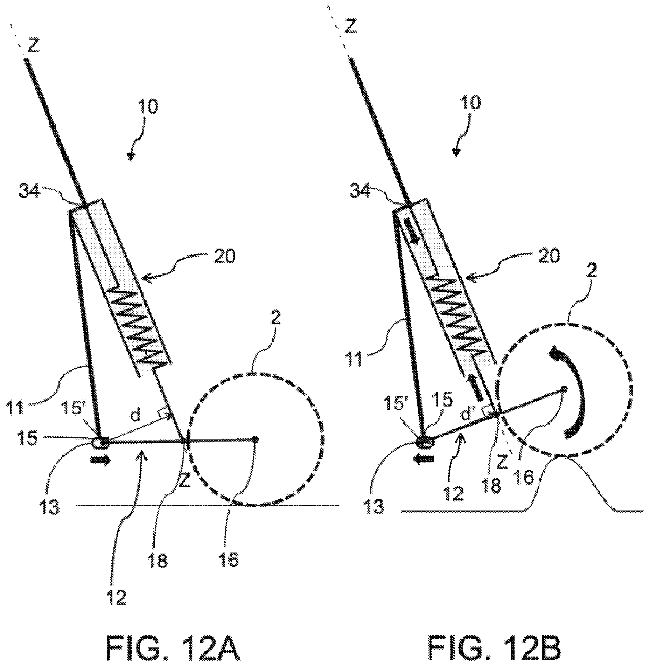

To clarify the movement of the movable fulcrum 15, Figures 12A and 12B illustrate two operating conditions of the suspension of the present invention. In Figure 12B, the wheel 2 (shown with reduced dimensions) moves upwards, e.g. due to a bump in the road surface, and with it the rotation pin 16 also moves upwards. This movement causes the swing arm 12 to rotate and consequently the shock absorber 20 to be compressed. Since the shock absorber group 20 is configured to slide axially in the hollow portion of the steering arm 11 and not to rotate about its hinge point 34, a rotation of the swing arm 12 about the hinge pin 18 of the attachment foot 22 of the shock absorber group 20 is configured. Said hinge pin 18 slides up and down along the longitudinal axis of the shock absorber group 20 according to the movement of the front wheel 2. Consequently, as shown in Figures 12A and 12B, the fulcrum 15 moves forward and backward, for example inside the slotted hole forming part of the first connection portion 13. If the fulcrum 15 were not movable or yielding, the suspension 20 would get stuck and its operation would be incomplete or inefficient. Still with reference to Figures 12A and 12B, it should be noted that the fulcrum 15 defines a respective axis 15 '. With the sinking of the suspension, the axis 15' is movable with respect to the steering arm 11. In other words, the axis 15' changes its relative distance with respect to the steering arm 11. Still in other words, taking as reference the rectilinear axis Z-Z, i.e. the steering axis, with the sinking of the suspension the distance d, defined by the perpendicular that passes through the axis 15' of the fulcrum and intercepts the axis Z- Z, changes. For example, the axis 15' of the fulcrum 15 goes backward going to increase the relative distance d'.

On the basis of what has been explained above, it is thus possible to understand how a motorcycle swing arm front suspension of the type described above may achieve the objects mentioned above with reference to the prior art.

In effect, the aforesaid swing arm motorcycle front suspension has an improved ability to react optimally to loads, allowing the pro-dive or anti-dive effect of the front swing arm suspensions of the prior art to be reduced or eliminated.

Without altering the principle of the invention, the embodiments and the details of implementation may vary widely with respect to those described and illustrated purely by way of non-limiting example, without thereby departing from the scope of the invention as defined in the accompanying claims.

## Claims

1. A motorcycle front suspension (10) comprising:
- a steering arm (11) mechanically connected, or adapted to be mechanically connected, to a steering handlebar (7) of a motorcycle (1);
- a swing arm (12) having a first connection portion (13) which rotatably connects the swing arm (12) to the steering arm (11) and a second connection portion (14) adapted to connect the swing arm (12) to an associable front wheel (2);
- a shock absorber group (20) having an attachment foot (22) rotatably joined to the swing arm (12);
wherein the first connection portion (13) rotatably connects the swing arm (12) to the steering arm (11) so that the swing arm (12) rotates with respect to the steering arm (11) about a fulcrum (15) which is movable with respect to the steering arm (11); **characterized in that** the first connection portion (13) is configured so that the swing arm (12) may slide with respect to the steering arm (11) along a defined sliding axis.

2. A motorcycle front suspension (10) according to claim 1, wherein the first connection portion (13) is a first end portion of the swing arm (12) rotatably joined to the steering arm (11) to rotate about the movable fulcrum (15), and the second connection portion (14) carries a rotation pin (16) of said associable front wheel (2).

3. A motorcycle front suspension (10) according to claim 1 or 2, wherein said movable fulcrum (15) is a yielding fulcrum.

4. A motorcycle front suspension (10) according to any one of the preceding claims, comprising elastic support means for the movable fulcrum (15).

5. A motorcycle front suspension (10) according to any one of the preceding claims, wherein the sliding axis is defined by a through or blind slotted hole, in particular wherein the slotted hole is defined inside the first connection portion (13) of the swing arm (12), more in particular wherein the steering arm (11) comprises a pin engaged in said through or blind slotted hole.

6. A motorcycle front suspension (10) according to any one of the preceding claims, comprising at least one silent block (19), operatively interposed between the steering arm (11) and the first connection portion (13) of the swing arm (12).

7. A motorcycle front suspension (10) according to any one of the preceding claims, wherein the steering arm (11) comprises a housing (30) having a chamber (31), inside of which the first connection portion (13) is arranged and wherein the housing (30) has a through opening (32) penetrated by the swing arm (12), so that the second connection portion (14) is arranged outside the housing (30).

8. A motorcycle front suspension (10) according to claim 7, further comprising an elastically deformable cap (33) fixed to said housing (30) to close the through opening (32), in particular wherein the elastically deformable cap (33) has a through hole penetrated by the swing arm (12).

9. A motorcycle front suspension (10) according to any one of the claims from 1 to 7, wherein the swing arm (12) comprises a first branch (121) and a second branch (122) arranged parallel to each other, and a bridge portion (123) which connects said branches (121,122), wherein said branches (121, 122) are configured and arranged so that the attachment foot (22) of the shock absorber group (20) is interposed therebetween.

10. A motorcycle front suspension (10) according to any one of the preceding claims, wherein the attachment foot (22) is rotatably joined to the swing arm (12) so that the swing arm (12) may rotate with respect to the attachment foot (22) about a rotation axis, which can only translate along a translation axis with respect to the steering arm (11).

11. A motorcycle front suspension (10) according to any one of the preceding claims, wherein the steering arm (11) is internally hollow and at least partially houses the shock absorber group (20) therein, in particular wherein the shock absorber group (20) comprises a spring (23) and a damper (24, 25) wherein the spring (23) is completely housed in the steering arm (11), in particular wherein the damper comprises a stem (24) and a sheath (25), wherein the stem (24) is adapted and configured to slide inside the sheath (25) and is housed in the steering arm (11).

12. A motorcycle front suspension (10) according to any one of the preceding claims, wherein the fulcrum (15) defines an axis (15 ') that with the sinking of the suspension is movable with respect to the steering arm (11).

13. A motorcycle front suspension (10) according to any one of the preceding claims, wherein said suspension has a steering axis (Z-Z) and wherein with the sinking of the suspension a distance (d), defined by the perpendicular that passes through the axis (15') of the fulcrum and intercepts the steering axis (Z- Z), changes.

14. A motorcycle (1) comprising at least one motorcycle front suspension (10) according to any one of the preceding claims.

15. A motorcycle (1) according to claim 14, wherein the motorcycle (1) is a moped.

## Patentansprüche

1. Motorradvorderradaufhängung (10), umfassend:
- einen Lenkhebel (11), der mechanisch mit einer Lenkstange (7) eines Motorrads (1) verbunden oder ausgelegt ist, um damit verbunden zu werden;
- einen Schwungarm (12), der einen ersten Verbindungsabschnitt (13), der den Schwungarm (12) drehbar mit dem Lenkhebel (11) verbindet, und einen zweiten Verbindungsabschnitt (14) aufweist, der dazu ausgelegt ist, den Schwungarm (12) mit einem zugehörigen Vorderrad (2) zu verbinden;
- eine Stoßdämpfergruppe (20), die einen Befestigungsfuß (22) aufweist, der drehbar mit dem Schwungarm (12) verbunden ist;
wobei der erste Verbindungsabschnitt (13) den Schwungarm (12) drehbar mit dem Lenkhebel (11) verbindet, so dass sich der Schwungarm (12) in Bezug auf den Lenkhebel (11) um einen Drehpunkt (15) dreht, der in Bezug auf den Lenkhebel (11) beweglich ist; **dadurch gekennzeichnet, dass** der erste Verbindungsabschnitt (13) so konfiguriert ist, dass der Schwungarm (12) in Bezug auf den Lenkhebel (11) entlang einer definierten Gleitachse gleiten kann.

2. Motorradvorderradaufhängung (10) nach Anspruch 1, wobei der erste Verbindungsabschnitt (13) ein erster Endabschnitt des Schwungarms (12) ist, der drehbar mit dem Lenkhebel (11) verbunden ist, um sich um den beweglichen Drehpunkt (15) zu drehen, und der zweite Verbindungsabschnitt (14) einen Drehstift (16) des zugehörigen Vorderrads (2) trägt.

3. Motorradvorderradaufhängung (10) nach Anspruch 1 oder 2, wobei der bewegliche Drehpunkt (15) ein nachgiebiger Drehpunkt ist.

4. Motorradvorderradaufhängung (10) nach einem der vorhergehenden Ansprüche, umfassend elastische Stützmittel für den beweglichen Drehpunkt (15).

5. Motorradvorderradaufhängung (10) nach einem der vorhergehenden Ansprüche, wobei die Gleitachse durch ein durchgehendes oder blindes Langloch definiert ist, insbesondere wobei das Langloch innerhalb des ersten Verbindungsabschnitts (13) des Schwungarms (12) definiert ist, bevorzugter wobei der Lenkhebel (11) einen Stift umfasst, der in das durchgehende oder blinde Langloch eingreift.

6. Motorradvorderradaufhängung (10) nach einem der vorhergehenden Ansprüche, umfassend mindestens einen Silentblock (19), der funktionell zwischen dem Lenkhebel (11) und dem ersten Verbindungsabschnitt (13) des Schwungarms (12) angeordnet ist.

7. Motorradvorderradaufhängung (10) nach einem der vorhergehenden Ansprüche, wobei der Lenkhebel (11) ein Gehäuse (30) mit einer Kammer (31) umfasst, in der der erste Verbindungsabschnitt (13) angeordnet ist, und wobei das Gehäuse (30) eine von dem Schwungarm (12) durchdrungene Durchgangsöffnung (32) aufweist, so dass der zweite Verbindungsabschnitt (14) außerhalb des Gehäuses (30) angeordnet ist.

8. Motorradvorderradaufhängung (10) nach Anspruch 7, ferner umfassend eine elastisch verformbare Kappe (33), die an dem Gehäuse (30) befestigt ist, um die Durchgangsöffnung (32) zu verschließen, wobei insbesondere die elastisch verformbare Kappe (33) ein von dem Schwungarm (12) durchdrungenes Durchgangsloch aufweist.

9. Motorradvorderradaufhängung (10) nach einem der Ansprüche 1 bis 7, wobei der Schwungarm (12) eine erste Verzweigung (121) und eine zweite Verzweigung (122), die parallel zueinander angeordnet sind, und einen Brückenabschnitt (123) umfasst, der die Verzweigungen (121, 122) verbindet, wobei die Verzweigungen (121, 122) so konfiguriert und angeordnet sind, dass der Befestigungsfuß (22) der Stoßdämpfergruppe (20) dazwischen angeordnet ist.

10. Motorradvorderradaufhängung (10) nach einem der vorhergehenden Ansprüche, wobei der Befestigungsfuß (22) drehbar mit dem Schwungarm (12) verbunden ist, so dass sich der Schwungarm (12) in Bezug auf den Befestigungsfuß (22) um eine Drehachse drehen kann, die in Bezug auf den Lenkhebel (11) nur entlang einer Translationsachse verschoben werden kann.

11. Motorradvorderradaufhängung (10) nach einem der vorhergehenden Ansprüche, wobei der Lenkhebel (11) innen hohl ist und darin zumindest teilweise die Stoßdämpfergruppe (20) darin aufnimmt, wobei die Stoßdämpfergruppe (20) insbesondere eine Feder (23) und einen Dämpfer (24, 25) umfasst, wobei die Feder (23) vollständig im Lenkhebel (11) aufgenommen ist, wobei der Dämpfer insbesondere einen Schaft (24) und eine Hülle (25) umfasst, wobei der Schaft (24) dazu ausgelegt und konfiguriert ist, innerhalb der Hülle (25) zu gleiten, und im Lenkhebel (11) aufgenommen ist.

12. Motorradvorderradaufhängung (10) nach einem der vorhergehenden Ansprüche, wobei der Drehpunkt (15) eine Achse (15') definiert, die beim Absenken der Aufhängung in Bezug auf den Lenkhebel (11) beweglich ist.

13. Motorradvorderradaufhängung (10) nach einem der vorhergehenden Ansprüche, wobei die Aufhängung eine Lenkachse (Z-Z) aufweist, und wobei sich mit dem Absenken der Aufhängung ein Abstand (d), der durch die Senkrechte definiert wird, die durch die Achse (15') des Drehpunkts verläuft und die Lenkachse (Z-Z) schneidet, ändert.

14. Motorrad (1), das mindestens eine Motorradvorderradaufhängung (10) nach einem der vorhergehenden Ansprüche umfasst.

15. Motorrad (1) nach Anspruch 14, wobei das Motorrad (1) ein Moped ist.

## Revendications

1. Suspension avant de motocyclette (10) comprenant :
- un bras de direction (11) relié mécaniquement ou adapté pour être relié mécaniquement à un guidon de direction (7) d'une motocyclette (1) ;
- un bras oscillant (12) ayant une première portion de liaison (13) qui relie de manière rotative le bras oscillant (12) au bras de direction (11) et une seconde portion de liaison (14) adaptée pour relier le bras oscillant (12) à une roue avant (2) pouvant être associée ;
- un groupe d'absorbeurs de chocs (20) ayant un pied de fixation (22) relié de manière rotative au bras oscillant (12) ;
dans laquelle la première portion de liaison (13) relie de manière rotative le bras oscillant (12) au bras de direction (11), de sorte que le bras oscillant (12) tourne par rapport au bras de direction (11) autour d'un point d'appui (15) qui est mobile par rapport au bras de direction (11) ;
**caractérisée en ce que** la première portion de liaison (13) est conçue de sorte que le bras oscillant (12) puisse coulisser par rapport au bras de direction (11) le long d'un axe de coulissement défini.

2. Suspension avant de motocyclette (10) selon la revendication 1, dans laquelle la première portion de liaison (13) est une première portion d'extrémité du bras oscillant (12) reliée de manière rotative au bras de direction (11) pour tourner autour du point d'appui mobile (15), et la seconde portion de liaison (14) porte une broche de rotation (16) de ladite roue avant (2) pouvant être associée.

3. Suspension avant de motocyclette (10) selon la revendication 1 ou 2, dans laquelle ledit point d'appui mobile (15) est un point d'appui flexible.

4. Suspension avant de motocyclette (10) selon l'une quelconque des revendications précédentes, comprenant des moyens de support élastiques pour le point d'appui mobile (15).

5. Suspension avant de motocyclette (10) selon l'une quelconque des revendications précédentes, dans laquelle l'axe de coulissement est défini par un trou oblong traversant ou borgne, en particulier dans laquelle le trou oblong est défini à l'intérieur de la première portion de liaison (13) du bras oscillant (12), plus particulièrement dans laquelle le bras de direction (11) comprend une broche en prise avec ledit trou oblong traversant ou borgne.

6. Suspension avant de motocyclette (10) selon l'une quelconque des revendications précédentes, comprenant au moins un bloc silencieux (19), interposé fonctionnellement entre le bras de direction (11) et la première portion de liaison (13) du bras oscillant (12).

7. Suspension avant de motocyclette (10) selon l'une quelconque des revendications précédentes, dans laquelle le bras de direction (11) comprend un boîtier (30) ayant une chambre (31), à l'intérieur de laquelle est agencée la première portion de liaison (13) et dans laquelle le boîtier (30) présente une ouverture traversante (32) traversée par le bras oscillant (12), de sorte que la seconde portion de liaison (14) soit agencée à l'extérieur du boîtier (30).

8. Suspension avant de motocyclette (10) selon la revendication 7, comprenant en outre un capuchon élastiquement déformable (33) fixé audit boîtier (30) pour fermer l'ouverture traversante (32), en particulier dans laquelle le capuchon élastiquement déformable (33) présente un trou traversant traversé par le bras oscillant (12).

9. Suspension avant de motocyclette (10) selon l'une quelconque des revendications 1 à 7, dans laquelle le bras oscillant (12) comprend une première branche (121) et une seconde branche (122) agencées parallèlement l'une à l'autre, et une portion de pont (123) qui relie lesdites branches (121, 122), dans laquelle lesdites branches (121, 122) sont conçues et agencées de sorte que le pied de fixation (22) du groupe d'absorbeurs de chocs (20) soit interposé entre celles-ci.

10. Suspension avant de motocyclette (10) selon l'une quelconque des revendications précédentes, dans laquelle le pied de fixation (22) est relié de manière rotative au bras oscillant (12), de sorte que le bras oscillant (12) puisse tourner par rapport au pied de fixation (22) autour d'un axe de rotation, qui ne peut se translater que selon un axe de translation par rapport au bras de direction (11).

11. Suspension avant de motocyclette (10) selon l'une quelconque des revendications précédentes, dans laquelle le bras de direction (11) est creux intérieurement et loge au moins en partie en son sein le groupe d'absorbeurs de chocs (20), en particulier dans laquelle le groupe d'absorbeurs de chocs (20) comprend un ressort (23) et un amortisseur (24, 25), dans laquelle le ressort (23) est entièrement logé dans le bras de direction (11), en particulier dans laquelle l'amortisseur comprend une tige (24) et une gaine (25), dans laquelle la tige (24) est adaptée et conçue pour coulisser à l'intérieur de la gaine (25) et est logée dans le bras de direction (11).

12. Suspension avant de motocyclette (10) selon l'une quelconque des revendications précédentes, dans laquelle le point d'appui (15) définit un axe (15') qui, avec l'enfoncement de la suspension, est mobile par rapport au bras de direction (11).

13. Suspension avant de motocyclette (10) selon l'une quelconque des revendications précédentes, dans laquelle ladite suspension présente un axe de direction (Z-Z) et dans laquelle, avec l'enfoncement de la suspension, une distance (d), définie par la perpendiculaire qui passe par l'axe (15') du point d'appui et croise l'axe de direction (Z-Z), change.

14. Motocyclette (1) comprenant au moins une suspension avant de motocyclette (10) selon l'une quelconque des revendications précédentes.

15. Motocyclette (1) selon la revendication 14, dans laquelle la motocyclette (1) est un cyclomoteur.
